# EUROPEAN PATENT APPLICATION

(11) **EP 0 639 750 A1**
(43) Date of publication of application: **22.02.1995**
(21) Application number: 94305633.3
(22) Date of filing: 29.07.1994
(51) Int. Cl.: F27D 23/00, C21C 5/52, F27B 3/20, F23C 5/02

(54) **Burner mounting device**

(30) Priority: 30.07.1993 GB 9315828
(71) Applicant: CO-STEEL SHEERNESS PLC, Sheerness, Kent ME12 1TH (GB)
(72) Inventor: Rhodes, John Anthony, Teynham, Sittingbourne, Kent ME9 9RN (GB)
(74) Representative: Bankes, Stephen Charles Digby

(57) **Abstract**

A device (8) for mounting a burner (6) in a cooling panel (4) of an electric arc furnace (2) includes a cast copper body containing a burner aperture (12), a cooling water manifold (16) and a frusto-conical outer surface (50) which is adapted to fit snugly into a complementary aperture in the cooling panel (4). A convex upper surface (38) of the device acts to shed scrap falling down an inner face of the cooling panel (4) both laterally away from the device and inwardly towards the furnace interior 10. The tapered fit between the device (8) and the cooling panel (4) minimizes leakage and facilitates separation.

## Description

The present invention relates to a burner mounting device for use in a furnace such as an electric arc furnace in which "cold" spots are provided with supplementary heating from burners supplied with oxygen and a fossil fuel, or oxygen alone.

Electric arc furnaces are customarily provided with one or more carbon electrodes which are lowerable into the furnace to establish electric arcs in order to melt scrap metal placed in the furnace. Due to the localised nature of the heating effected by the arcs and also due to recent developments in electric arc furnace design which have resulted in furnaces which have a highly non-circular horizontal cross-section in their lower region so called cold spots exist when the furnace is being operated. In order to heat up these cold spots burners are often provided which project through the wall of the furnace.

Inner walls of the furnace are lined with panels containing passages through which cooling water flows. The panels extend down as far as a base made of a refractory material. Recent design developments have resulted in furnaces with a bottom tap outlet for the molten metal, with a consequence that the extent to which the furnace is tilted for pouring out the molten metal is significantly reduced. This in turn means that the water cooled panels may extend to a lower point in the furnace. The consequence of this is that burners may be situated at a lower point in the furnace. It is particularly advantageous to place the burners as low as possible, since, if they are placed at a high level the scrap level falls (due to melting) to a point below the burners at an earlier stage in the melting process. The two consequences of this are (i) the burner becomes largely ineffective in the melting process and (ii) deleterious flame impingement on the electrodes occurs. The latter drawback is particularly undesirable as the expense involved in electrode replacement in such a furnace represents a significant portion of the running costs. By positioning the burners at a low point in the furnace they are exposed to a particularly aggressive environment, for example a rapid increase in slag volume may occur when there is an abrupt fall of scrap into the slag causing slag boil, or when the slag chemistry is not controlled correctly.

In prior art furnaces where there is a requirement to mount a burner in a cooling panel, a parallel sided square section mounting box fabricated from welded steel plates has been provided. Such a mounting box is described in US patent specification 4,526,531. This mounting box is fitted in a square aperture in the cooling panel with its inner surface flush with an inner surface of the associated cooling panel. The mounting box includes inlet and outlet ports for series connection with the cooling panel water circuit. The tolerances to which such cooling panels and mounting boxes can be made means that inevitably some small gaps exist between the mounting box and the cooling panel through which undesirable slag bleed or flame exit can occur particularly when slag boil takes place. In addition to slag bleed occurring a certain amount slag which has bled into the gaps solidifies and makes the task of removing the mounting box from the panel very difficult. Electric arc furnaces are normally put out of operation for overhaul and repair every 1 to 2 weeks and thus there may be a necessity to remove the mounting boxes from the cooling panels quite frequently.

The object of the invention is to provide a burner mounting device suitable for mounting a burner in a cooling panel of an electric arc furnace which overcomes at least some of the above mentioned disadvantages.

Thus according to a first aspect of the invention there is provided a mounting device for mounting a burner in a cooling panel of an electric arc furnace, the mounting device having an aperture for receiving a burner and inlet and outlet ports for connecting the mounting device to a cooling circuit, characterized in that the mounting device has an exterior which is tapered for connection to a furnace wall to prevent leakage round the mounting device.

By providing the mounting device with a tapered exterior, it can easily be fitted into a complementarily tapered hole in a cooling panel and by merely forcing the mounting device into the tapered hole an effective seal against slag bleed can be provided. Even in the very unlikely circumstance of slag bleed occurring between the mounting device and the cooling panel, which results in solidified slag being deposited in the gap therebetween, removal of the mounting device from the cooling panel is greatly facilitated by the tapered fit.

Preferably all diametrically opposed furnace wall engageable regions of the exterior of the device converge towards an exit region of the burner aperture.

In order that the taper of the mounting device may be formed by a simple machining process the mounting device preferably has a frusto-conical form, but not necessarily a right frusto-conical form. Other less preferred exterior forms that the mounting device may have include a frusto pyramidal form such as a frustum of a triangular or square based pyramid.

The mounting device and cooling panel are preferably configured such that when installed part of the mounting device projects past an inner surface of the cooling panel and has a convex and preferably arcuate upper surface which more preferably also slopes downwards. Such an arrangement can be easily provided when the mounting device is of a frust-conical form and acts to shed scrap falling down an inner surface of the cooling panel both sideways and away from the burner and the inner surface of the cooling panel. This will reduce the chance of scrap becoming caught on the mounting device and will also project scrap away from the burner slightly, thus reducing the problem of reflected heat damage of the mounting device and burner which can occur when a high powered burner projects and intensely hot flame towards scrap positioned very close to the outlet of the burner. The problem of scrap falling from a significant height is particularly appreciable in so called shaft furnaces in which scrap enters the furnace down a substantially vertical shaft in order to extract heat from hot gas leaving the furnace.

The problem of reflected heat damage can be still further reduced by configuring an inner face of the mounting device which faces into the furnace so that it slopes towards its lower end towards the cooling panel inner surface. The angle between these two faces is preferably in the range 10° to 30°.

In order to still further reduce the problem of reflected heat damage the mounting device is preferably configured to hold a burner in the burner aperture with its outlet located inwardly from the inner face of the mounting device. With such a design it is preferable to provide an outlet and of the burner aperture with an outward taper of between 10° and 30° so as to reduce the problem of flame impingement on the mounting device.

So as to direct the burner flame into the scrap even when the scrap is at a low level and also to reduce flame erosion of furnace electrodes a central axis of the burner aperture is preferably directly downwardly towards the furnace interior. More preferably the axis is directed downwardly at an angle of between 20° and 45° to the horizontal.

In order to avoid the use of welds in the mounting device which, upon failure, can lead to catastrophic release of water into the furnace, and to increase heat transfer through the device the mounting device preferably includes a monolithic eg cast structure of a metal having a thermal conductivity of not less than 200 W/m°K at 100°C such as copper (394 W/m°K). Such a cast mounting device can conveniently incorporate a cooling manifold positioned to direct cooling water close to the inner face of the mounting device, but not so close as to cause a significant danger of water leaks occurring as a result of mounting device erosion. This erosion may be caused by flame impingement, reflected heat damage, stray arcs from the electrodes shorting out via the mounting device or the effects of physical damage from scrap loading or furnace cleaning.

At its closest point to the mounting devices inner face the manifold is preferably between 30mm and 50mm from the inner face.

The mounting device preferably includes a locating means such as a pin projecting from its rear face for orientating a burner with respect to the mounting device. The mounting device preferably also includes a support bracket for supporting a burner in the burner aperture. The support bracket preferably has attachment means for attaching it to a rear face of the mounting device and is engageable with the locating means.

The invention provides in a second aspect a mounting device as described above in combination with a burner mounted in the burner aperture and in a third aspect, a mounting device in combination with a cooling panel and optionally in combination with a burner.

Individual features of the mounting device described possibly in combination with a burner and cooling panel may also constitute separate inventions independently of the other features mentioned.

The invention will now be described by way of example only with reference to the accompanying drawings in which:
Figure 1 shows a sectional elevation of a mounting device constructed according to the invention mounted in a cooling panel,
Figure 2 is a view in the direction of arrow A of the mounting device shown in Figure 1 with the cooling panel details omitted,
Figure 3 is a view in the direction of arrow B of the mounting device shown in Figure 1 with the cooling panel details omitted and showing the cooling water manifold in broken lines,
Figure 4 is a view in the direction of arrow C of the mounting device shown in Figure 1 with support bracket and cooling panel details omitted,
Figure 5 is a view in the direction of arrow C of the support bracket shown in Figure 1.

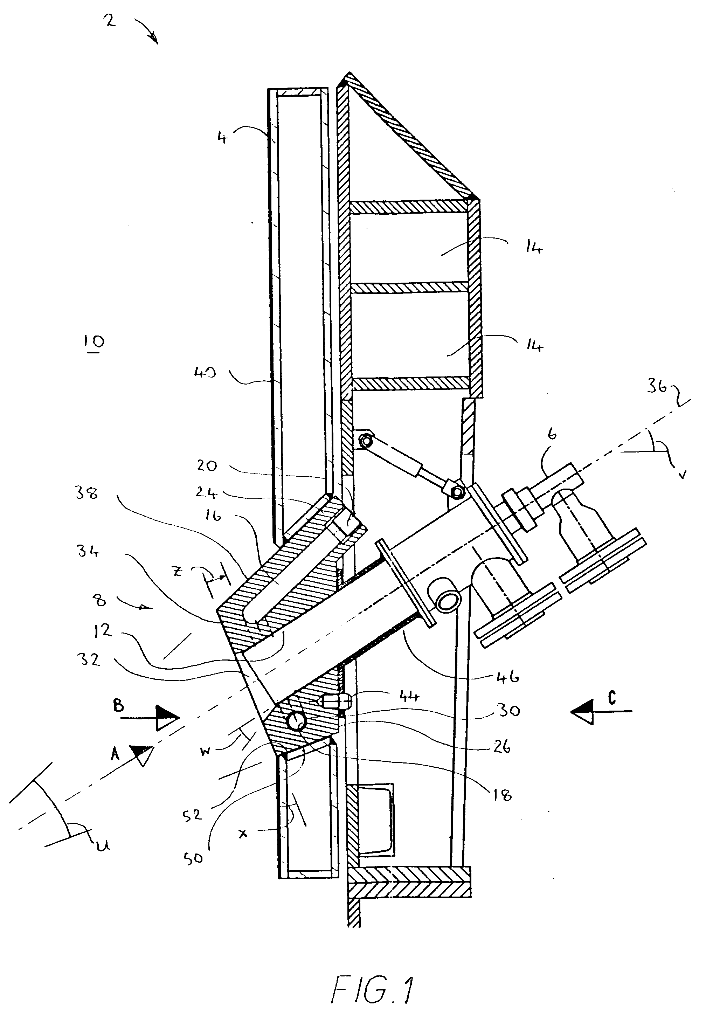

Figure 1 shows a cross section through a wall of an electric arc furnace in a region where a water cooled panel 4 is provided in which a burner 6 is mounted by means of a mounting device 8. The burner 6 is located in a burner aperture 12 in the mounting device 8 and is positioned so as to shoot a high temperature flame downwards at an angle V of 32° to the horizontal towards the furnace interior 10.

The cooling panel 4 is internally partitioned so as to define a circuitous route through which cooling water is pumped during operation of the furnace. This cooling water is circulated round the furnace by means of water ducts 14 which are integrally formed in side walls of the furnace 2 in a manner well known in the furnace art.

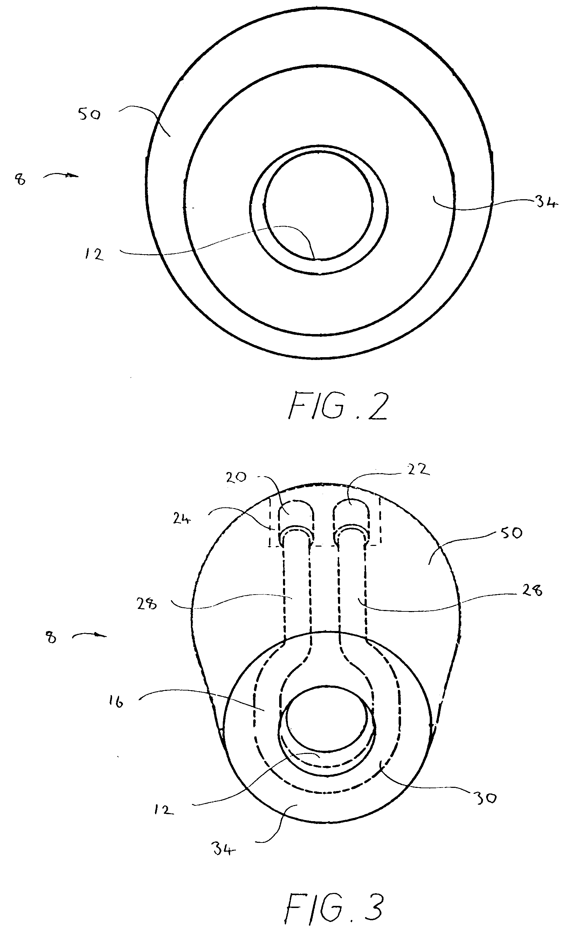

The mounting device includes a water manifold 16 the form of which can be seem from Figures 1 and 3. The manifold 16 includes a copper lining pipe 18 which is positioned in the copper body of the mounting device when it is initially cast. Inlet port 20 and outlet port 22 are provided at either end of the lining pipe 18. These ports are located in a raised section 24 of the rear face 26 of the mounting device and are internally threaded so as to enable inlet and outlet ports (not shown) of the cooling panel 4 to be connected to the mounting device by pipes which are omitted for the sake of clarity. Cooling water pumped round the cooling panel 4 thus also pass round the water manifold 16 in the mounting device. The manifold includes straight portions 28 which lead from the raised section 24 forwards to a ring section 30 which surrounds an exit region 32 of the burner aperture 12. The ring section 30 of of the manifold is located at distance Z of 40mm perpendicularly from the inner face 34 of the mounting device.

Walls of the exit region 32 of the burner aperture 12 diverge at an angle W of 20° from the central axis 36 of the burner aperture. This diverging exit region will reduce mounting device erosion from burner flame impingement.

The inner face 34 of the mounting device is inclined at an angle X of 20° to the vertical, towards the furnace interior 10 towards its upper end. This results in a cavity forming in the scrap immediately in front of the inner face 34 as the sca falls past the mounting device. This in turn reduces the problem of reflected heat damage.

As a result of the frusto-conical form of the exterior surface 50 of the mounting device, the upper surface 38 of the mounting device which projects through the inner surface 40 of the cooling panel 4 presents a smooth arcuate surface which will act to deflect any scrap falling down the inner surface 40 of the cooling panel 4.

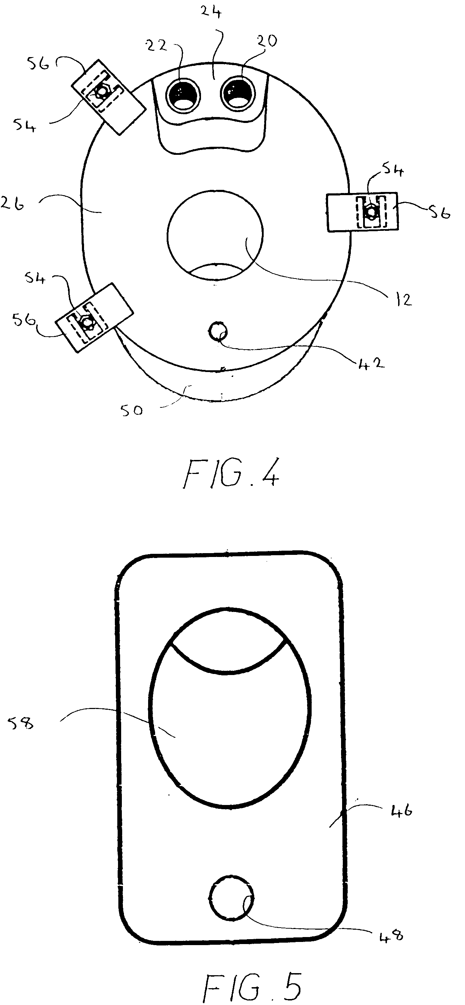

The rear face of the mounting device shown in Figure 4 is provided with a threaded hole 42 in which a pin 44 is screwed. This pin passes through a locating aperture 48 in a burner support bracket 46 which is held firmly against the rear face 26 of the mounting device by fixing means which are not shown. A compliant heat resistant gasket such as one of a ceramic fibre blanket material is disposed between the mounting device 8 and the support bracket 46.

The burner 6 is fastened into the support bracket 46 by fixing means such as welding.

The exterior surface 50 of the mounting is frusto-conical and has sides which converge towards each other at an angle U of 21°. The cooling panel 4 is provided with a complementarily tapered hole 52 for receiving the mounting device.

When the burner is to be mounted in the cooling panel, the mounting device is slid into the tapered hole 52 in the cooling panel until the tapered exterior 50 of the mounting device engages the tapered hole 58 in the cooling panel. A retaining plate 56 is then passed over each threaded stud 54 and retained there by a nut. Tightening of the nut causes the mounting device to be pressed firmly into the tapered hole, thereby sealing the tapered hole in the panel against slag bleed and flame exit. The support bracket 46 is then placed against the rear face 26 of the mounting device with the pin 44 projecting through its locating aperture 48 and located there by some suitable means. The burner 6 is slid through a hole 58 in the bracket 46, and into burner aperture 12 in the mounting device. The inlet and outlet ports 20 and 22 are connected to outlet and inlet ports respectively of the cooling panel 4. The burner is then ready for operation.

Despite the tight fit of the mounting device in the cooling panel, removal of the mounting device therefrom is a simple process due to the tapered fit of the mounting device in the tapered hole 52 in the cooling panel. Overhaul of the furnace is thereby greatly facilitated and the consequential costly down time is significantly reduced.

## Claims

1. A mounting device (8) for mounting a burner (6) in a cooling panel (4) of an electric arc furnace (2), the mounting device (8) having an aperture (12) for receiving a burner (6) and inlet and outlet ports (20, 22) for connecting the mounting device (8) to a cooling circuit, characterized in that the mounting device (8) has an exterior (50) which is tapered for connection to a furnace wall to prevent leakage round the mounting device.

2. A mounting device (8) as claimed in claim 1 characterized in that all diametrically opposed furnace wall engageable regions of the exterior converge towards an exit region (32) of the burner aperture (12).

3. A mounting device (8) as claimed in claim 1 or 2, characterized in that the tapered exterior (50) is frusto-conical.

4. A mounting device as claimed in claim 1, 2 or 3, having an upper surface for shedding matter falling down an inner surface of the cooling panel away from a burner mounted in the device.

5. A mounting device as claimed in claim 4, characterized in that the upper surface is convex.

6. A mounting device as claimed in any preceding claim characterized in that an inner flame exit face of the device is configured to slope at an angle in the range 10° to 30° towards a cooling panel in which the device is mounted towards a lower end of the device.

7. A mounting device as claimed in any preceding claim characterized in that an outlet of the burner aperture has faces which diverge from a central axis of the burner aperture at between 10° and 30°.

8. A mounting device as claimed in any preceding claim including a cast body having a tapered exterior.

9. A mounting device as claimed in any preceding claim including a cooling manifold connected to the inlet and outlet ports which at its closest point to an inner flame exit face is between 30mm and 50mm therefrom.

10. A mounting device as claimed in any preceding claim in combination with and mounted in a cooling panel.
